(19) Europäisches Patentamt
European Patent Office
Office européen des brevets

(11) **EP 2 976 507 B1**

(12) **FASCICULE DE BREVET EUROPEEN**

(45) Date de publication et mention
de la délivrance du brevet:
**09.05.2018 Bulletin 2018/19**

(21) Numéro de dépôt: **14716882.7**

(22) Date de dépôt: **18.03.2014**

(51) Int Cl.:
**F01D 5/14** (2006.01)

(86) Numéro de dépôt international:
**PCT/FR2014/050623**

(87) Numéro de publication internationale:
**WO 2014/147332 (25.09.2014 Gazette 2014/39)**

(54) **AUBE ET ANGLE DE DIEDRE D'AUBE**

SCHAUFEL UND SCHAUFELDIHEDRALWINKEL

BLADE AND BLADE DIHEDRAL ANGLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.03.2013 FR 1352495**

(43) Date de publication de la demande:
**27.01.2016 Bulletin 2016/04**

(73) Titulaire: **SNECMA**
**75015 Paris (FR)**

(72) Inventeur: **CELLIER, Damien**
**F-77550 Moissy-cramayel Cedex (FR)**

(74) Mandataire: **Brevalex**
**95, rue d'Amsterdam**
**75378 Paris Cedex 8 (FR)**

(56) Documents cités:
**EP-A2- 1 930 600        US-A1- 2010 054 946
US-A1- 2012 244 005**

**Description**

**DOMAINE TECHNIQUE ET ART ANTÉRIEUR**

L'invention concerne la structure d'une aube (ou d'une pale) d'un compresseur d'une turbomachine, du type pouvant être utilisé dans un moteur aéronautique.

Un tel compresseur comporte une succession d'étages disposés en série. Chaque étage comporte une roue à aubes mobile (rotor), ou aubage mobile, et un stator à aubes (redresseur).

Chaque aubage mobile comporte lui-même un disque circulaire sur lequel sont fixées des aubes (ou ailettes) et tourne devant une partie du stator. Il permet d'aspirer et d'accélérer le flux d'air en le déviant par rapport à l'axe du moteur. Le redresseur qui le suit redresse le flux dans l'axe et le ralentit en transformant une partie de sa vitesse en pression.

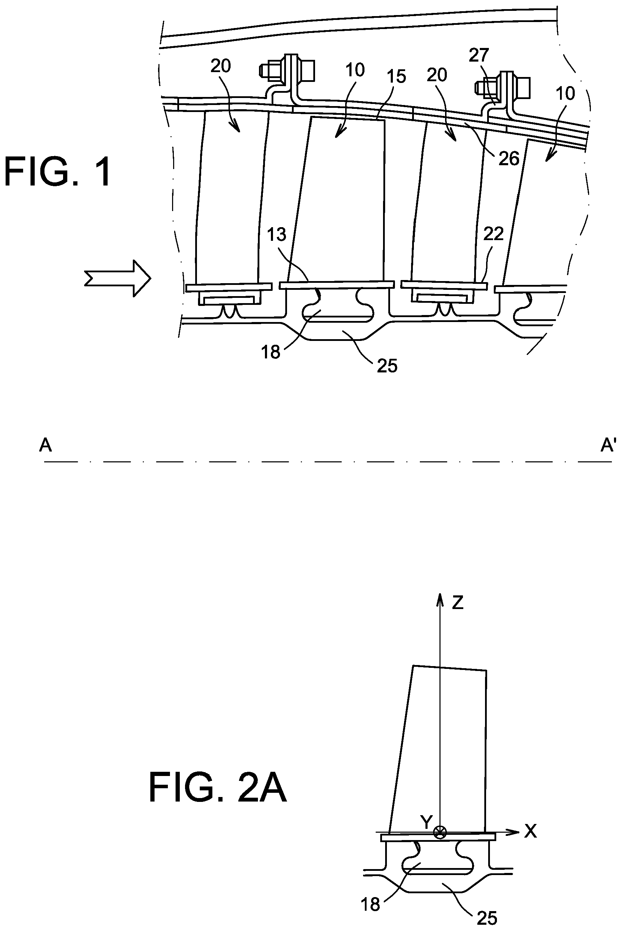

On a représenté schématiquement, en figure 1, une coupe montrant une partie d'un tel compresseur. Sur cette figure, on identifie les aubes mobiles 10 et les aubes 20 des redresseurs. Ces dernières sont solidaires de viroles 22, 26. La référence 27 désigne une bride pour fixation de l'ensemble à un carter de compresseur.

Chaque aube mobile 10 est positionnée sur une plate-forme interne 13 qui se prolonge par un pied 18, lui-même engagé dans un logement d'un rotor 25. On notera que ces pièces peuvent également être réalisée en un seul bloc, on appelle cet ensemble un Disque Aubagé Monobloc (DAM).

La rotation du rotor s'effectue autour d'un axe AA'.

Pour concevoir les aubes 10, 20 d'un tel compresseur HP (haute pression), des études sont réalisées, en vue d'améliorer la performance aérodynamique de l'aubage, tout en assurant une certaine tenue mécanique.

On s'intéresse notamment à l'empilage des coupes. La loi d'empilage tangentiel correspond à la position du centre de gravité de chaque section de l'aube selon un plan perpendiculaire à la direction principale radiale de l'aube, par rapport à un axe principal radial de l'aube.

L'empilage des coupes de l'aubage est un paramètre important dans ce type d'études. Cette variable joue en effet un rôle, tant du point de vue aérodynamique que du point de vue mécanique. La recherche d'une loi d'empilage optimale représente de ce fait un travail conséquent dans toute conception d'aubages de compresseur HP.

Il se pose le problème d'optimiser les performances aérodynamiques de chaque aubage, définies notamment par la marge au pompage et le rendement. On souhaite également, lors d'une telle optimisation, assurer ou maintenir la tenue mécanique de chaque aube.

US-2 012/0243983-A1 et US 2012/0243975-A1 décrivent des aubes dont le bord d'attaque possède des zones dont l'angle de dièdre est positif et des zones où il est négatif, avec de plus un maximum dans une partie de milieu de hauteur, conformément au préambule de la revendication indépendante.

Un autre exemple est décrit dans la demande de brevet US-2010/054946.

**EXPOSE DE L'INVENTION**

L'invention propose d'abord une aube d'un compresseur, définie en chacun des points de sa surface par un angle de flèche et un angle de dièdre, comportant :

- un pied,
- une tête, la distance entre le pied et la tête, mesurée le long d'un axe, dit axe radial, perpendiculaire à un axe de rotation du compresseur, étant appelée hauteur radiale (h),
- une zone, comprise entre le pied et la tête, dont une première partie présente un angle de dièdre de bord d'attaque strictement positif, et une deuxième partie présente un angle de dièdre de bord d'attaque strictement négatif.

Et de façon caractéristique, l'angle de dièdre de bord d'attaque est strictement négatif en tête, et inférieur à -10°.

La zone d'angle maximum est comprise, suivant ledit axe radial, entre r = 0,25 h ou 0,3 h ou 0,5h et r = 0,65 h ou 0,7h.

Une forme d'aube selon l'invention, et en particulier le choix d'une zone d'angle maximum telle que ci-dessus, permet d'améliorer l'opérabilité du compresseur, sans imposer une contrainte mécanique et/ou une consommation trop importante. On peut ainsi optimiser les performances aérodynamiques (marge au pompage, rendement) sans dégrader la tenue mécanique de l'aube.

Si la zone située au voisinage du pied de l'aube est à angle de dièdre strictement négatif, l'angle en pied est par exemple au plus égal à -10° ou à -15°.

Selon une réalisation, la première partie, à angle de dièdre strictement positif, forment un intervalle, ou s'étend, au plus, entre le pied de l'aube et une position située à r = 0,85h le long de l'axe radial, l'angle de dièdre étant par exemple négatif en tête.

La première partie, qui présente un angle de dièdre strictement positif, peut former un intervalle :

- s'étendant, le long de l'axe radial, au plus entre r = 0,1h et r = 0,85 h, l'angle de dièdre étant par exemple négatif en pied,
- et/ou ayant une longueur, mesurée suivant ledit axe radial, au moins égale à 0,4h ou comprise entre 0,1 h et 0,60 h.

De préférence, la différence entre l'angle de dièdre mesuré au pied de l'aube et l'angle de dièdre mesuré à la tête de l'aube, est inférieure à 10°.
L'aube telle que ci-dessus peut :

- être mobile, son pied étant destiné à être fixé à un disque circulaire d'un rotor dudit compresseur, ou bien l'aube faisant partie d'un disque aubagé monobloc,
- ou bien être fixe, faisant partie d'un stator fixe ou d'un stator à calage variable.

L'invention concerne également un moteur, du type utilisé en aéronautique, comportant un compresseur muni d'aubes fixes et d'aubes mobiles, une ou plusieurs aubes étant du type décrit ci-dessus.

## BREVE DESCRIPTION DES FIGURES

La Figure 1 est un schéma d'une section d'un compresseur muni de ses aubes, fixes et mobiles.
La Figure 2A est un schéma d'une aube, avec, en superposition, le positionnement d'un repère trirectangle (X, Y, Z).
La Figure 2A est un schéma d'une aube, avec, en superposition, le positionnement d'un repère trirectangle (X, Y, Z).

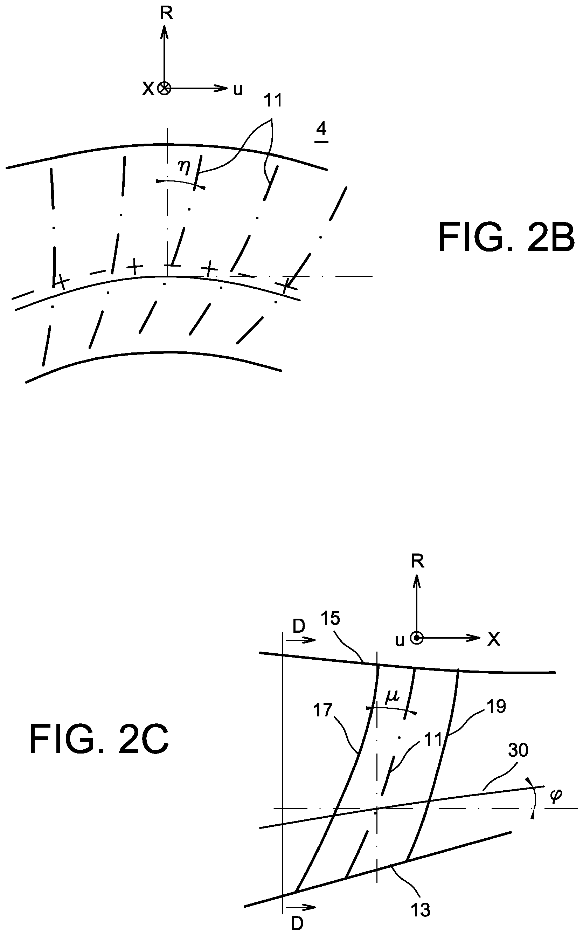

Les Figure 2B et 2C sont des schémas de coupe d'une aube, avec, en superposition, l'indication des différents angles utiles à la compréhension de l'invention.

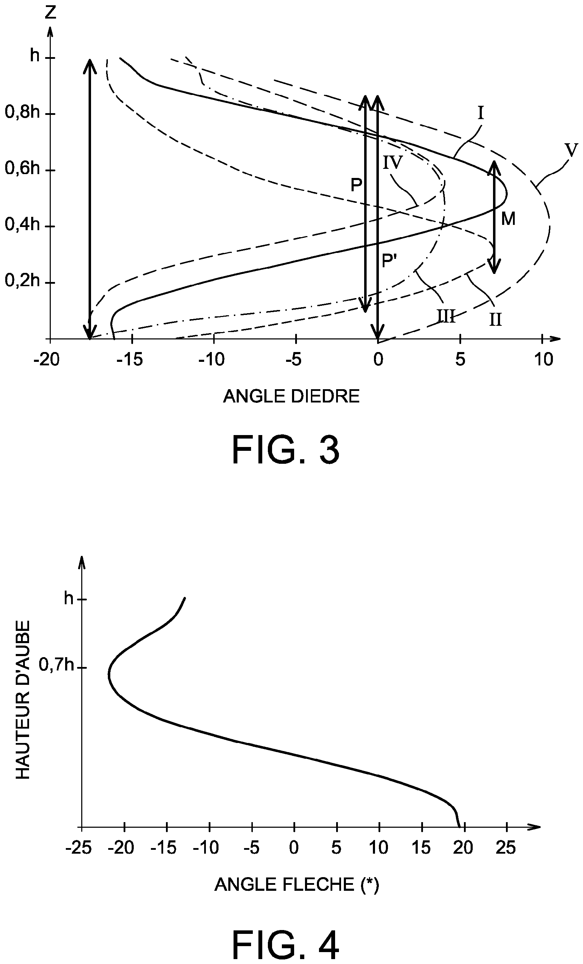

La Figure 3 illustre divers exemples d'évolution d'un angle de dièdre d'une aube selon l'invention.
La figure 4 représente l'évolution d'un angle de flèche en fonction de la hauteur d'aube.

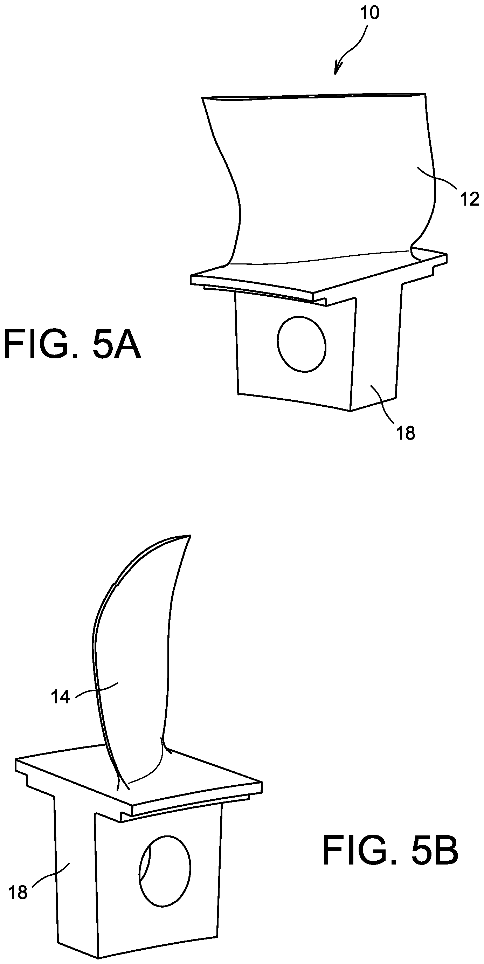

Les figures 5A-5C représentent des vues d'une aube réalisée conformément à l'invention.

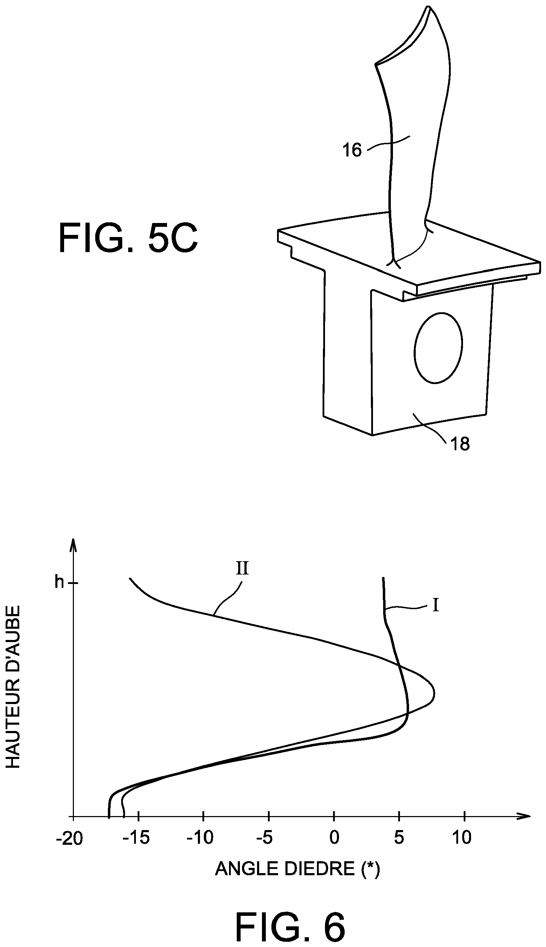

La Figure 6 illustre une comparaison entre l'évolution d'un angle de dièdre d'une aube selon l'invention et l'évolution d'un angle de dièdre qui ne met pas en oeuvre l'enseignement de la présente invention;

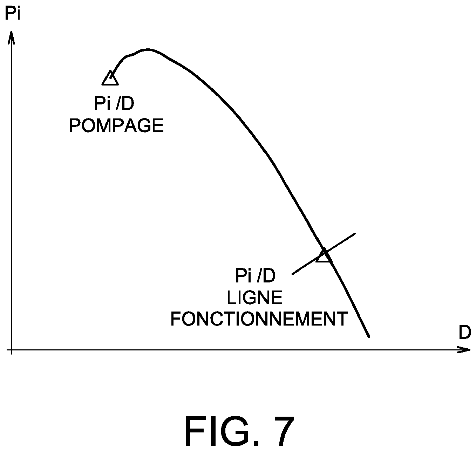

La figure 7 représente une courbe d'isorégime dans le champ Pi-D.

## DESCRIPTION DETAILLEE DE MODES PREFERES DE REALISATION

Pour chaque aube, on définit un repère XYZ telle que schématisé en figure 2A : l'axe X est l'axe machine, orienté de l'amont vers l'aval, et il est parallèle à l'axe de rotation AA' (voir figure 1).
L'axe Z est perpendiculaire à X et définit l'altitude z, depuis le pied de l'aube (z=0) jusqu'au sommet de l'aube (z=h).
L'axe Y est tangentiel, perpendiculaire à X et à Z.
A partir de là, on définit un autre repère, ou repère cylindrique local (X, R, u), lié à l'aube considérée, dans lequel :

X est toujours l'axe machine, orienté de l'amont vers l'aval,
R est l'axe radial, défini comme Z, il est perpendiculaire à X et définit l'altitude par rapport au pied de l'aube; on l'appelle aussi axe d'empilage,
u est l'axe azimutal orienté de l'intrados de l'aube vers l'extrados de l'aube adjacente pour un moteur de type SHAR (sens horaire orienté vers l'arrière), ou orienté suivant la direction inverse pour un moteur de type SHAV (sens horaire orienté vers l'avant) ; il est perpendiculaire à X et à R.Dans le cas particulier de la pale représentée en figure 2A, le repère cartésien (X, Y,Z) et le repère cylindrique local (X, R, u) sont confondus.

L'empilage des coupes (on rappelle qu'il s'agit de la position du centre de gravité de chaque section de l'aube selon un plan parallèle à (X, u) et perpendiculaire à la direction principale radiale R de l'aube, par rapport à un axe principal radial de l'aube) peut être défini de différentes façons :

- par la position $X_G$, $y_G$ du centre de gravité des coupes suivant les axes x et y,
- ou par les angles de flèche et de dièdre comme décrit par exemple dans le document de Leroy H. Smith et al. « Sweep and dihedral effects in axial-flow turbomachinery », Sept 63, ASME.

On choisit ici cette dernière définition. Les angles de flèche et de dièdre sont donc ceux définis dans le document de Leroy H. Smith et al. cité ci-dessus. Les angles a, r, u définis dans cet article sont les angles X, R, u définis ci-dessus.

Ces angles mesurent les différences des directions entre l'écoulement et les aubes, en projection respectivement dans un plan radial et axial et un plan axial et tangent à la direction de rotation de la machine.

Si l'écoulement est purement axial, ce qui est à peu près le cas à l'entrée de la machine, l'angle de flèche exprime l'inclinaison de l'aube en direction axiale, et l'angle de dièdre, l'inclinaison de l'aube en direction tangentielle. Un signe négatif de l'angle de flèche exprime une inclinaison vers l'amont, et un signe positif, vers l'aval ; et un signe négatif de l'angle de dièdre exprime une inclinaison vers l'intrados, et un signe positif, vers l'extrados. Les inclinaisons sont définies à partir de direction radiales vers l'extérieur.

A chacun des points de la surface de l'aube est donc associé un angle de flèche et un angle de dièdre.

Les figures 2B et 2C reproduisent la figure 4 de cet article. Elles représentent des vue en coupe, respectivement :

- dans le plan R, u (tous deux perpendiculaires à l'axe AA'), d'un aubage mobile (figure 2B),
- dans le plan R, X (qui contient l'axe AA'), d'une aube (figure 2C).

On a ajouté, sur ces figures, la référence 11 qui désigne une possible courbe d'étude des angles de flèche et de dièdre. En figure 2C, on retrouve les références 13 et 15 qui désignent respectivement la partie de l'aube la plus proche du pied, et la tête de l'aube. Sur cette figure, on voit également le bord d'attaque 17 et le bord de fuite 19 de l'aube représentée. La référence 30 désigne une ligne de courant à partir de laquelle une surface d'écoulement axisymétrique (autour de l'axe moteur) est engendrée.

En outre, on voit, en figure 2B, l'angle $\eta$ que fait, dans le plan [R;u], en chacun de ses points, la courbe 11 avec l'axe R. On peut considérer qu'il s'agit de l'angle que fait, en chaque point de la courbe 11, la tangente à cette courbe 11 avec l'axe R.

L'angle $\mu$ (figure 2C) désigne, en chaque point de la courbe 11, l'angle que fait celui-ci (ou sa tangente), dans le plan [X;R], avec l'axe R. On peut considérer ici que les angles de flèche et de dièdre sont ceux au bord d'attaque de l'aube considérée. Dans ce cas, la courbe 11 suit le bord d'attaque de la pale, et est donc confondue avec le bord d'attaque 17. Enfin, on désigne par $V_x$, $V_R$, $V_u$, la projection, sur les axes X, R, u, du vecteur vitesse du flux axisymétrique relatif à la rangée d'aubes considérée.

On définit également :

$$\tan \beta = V_u/V_x$$

et :

$$\tan \phi = V_R/V_x$$

En suivant les notations ci-dessus, et conformément à l'enseignement de l'article de L.H.Smith, l'angle de flèche $\lambda$ est défini par :

$$\sin \lambda = \frac{\tan \varphi + \tan \mu + \tan \eta \tan \beta}{\sqrt{(1 + \tan^2 \eta + \tan^2 \mu)(1 + \tan^2 \beta + \tan^2 \varphi)}}$$

et l'angle de dièdre v est défini par :

$$\sin \nu = \frac{\sec \varphi \tan \eta - \tan \beta(\sin \varphi + \cos \varphi \tan \mu)}{\sqrt{(1 - \tan \varphi \tan \mu)^2 + (\tan \beta - \tan \varphi \tan \eta)^2 + (\tan \eta - \tan \beta \tan \mu)^2}}$$

Des exemples de réalisation d'une aube selon l'invention vont être décrits en liaison avec la figure 3.

Sur cette figure, sont représentées diverses courbes qui donnent des exemples d'évolution de l'angle de dièdre en bord d'attaque, tel que défini ci-dessus, en fonction de la position le long de l'axe R tel que, lui aussi, défini ci-dessus.

On voit, d'après ces figures, que l'évolution de l'angle de dièdre définit une forme, dite « bulbée », qui comporte une partie pour laquelle l'angle de dièdre a des valeurs strictement positives et une partie (qui peut elle même comporter deux sous parties) pour lesquelles l'angle de dièdre a des valeurs strictement négatives.

En figure 3, on distingue, selon l'axe des ordonnées (axe R):

- une première partie, dans laquelle l'angle de dièdre est strictement négatif; pour chacune des courbes I-IV représentées, cela correspond, sur l'axe R des ordonnées, à 2 zones, l'une proche du pied de l'aube, l'autre proche de la tête de l'aube,
- et une deuxième partie, dans laquelle l'angle de dièdre est strictement positif; pour chacune des courbes représentées, cela correspond, sur l'axe R des ordonnées, à une seule zone (ou un seul intervalle), située à distance du pied de l'aube et de la tête de l'aube.

Plus précisément, dans le cas des exemples qui sont illustrés sur la figure 3 :

- la courbe I a une zone (ou intervalle) de dièdre strictement positif qui s'étend, selon l'axe R, entre, environ, 0,35h et 0,72h,
- la courbe II a une zone (ou intervalle) de dièdre strictement positif qui s'étend, selon l'axe R, entre, environ, 0,15h et 0,47h,
- la courbe III a une zone (ou intervalle) de dièdre strictement positif qui s'étend, selon l'axe R, entre, environ, 0,17h et 0,70h,
- la courbe IV a une zone (ou intervalle) de dièdre strictement positif qui s'étend, selon l'axe R, entre, environ, 0,43h et 0,72h.

Dans la, ou les, zones autres que la zone de dièdre strictement positif, l'angle de dièdre est strictement négatif, et il est nul en seulement 2 points.

Comme on le comprend des explications ci-dessus, la forme bulbée s'étend ici entre une première position, dite position basse, située à proximité ou du côté du pied de l'aube (cote r=0 le long de l'axe R), et une deuxième position, dite position haute, située à proximité, ou du côté, de la tête de l'aube (qui a la cote h le long de l'axe R).

La position basse est disposée entre le pied de l'aube (position r=0 le long de l'axe R) et une position, éloignée du pied, située à environ r=0,25h.

La position haute est disposée entre la tête de l'aube (ce qui correspond à une position, éloignée du pied d'une distance h) et une position, éloignée du pied d'environ 0,75h. En tête de l'aube, l'angle de dièdre est strictement négatif.

De préférence, l'angle de dièdre a une valeur strictement positive dans un intervalle :

- qui s'étend, le long de R, sur une longueur comprise entre 0,1 h et 0,6 h,
- mais qui, en outre, est disposé ou strictement inclus à l'intérieur d'une zone (identifiée par P sur la figure 3) de l'aube pour laquelle r est compris entre 0,1 h et 0,85 h. Autrement dit, la zone (ou l'intervalle) à angle de dièdre strictement positif a, selon R, un point inférieur situé à au moins r=0,1h (il peut être au-delà, par exemple à r=0,2h ou à r=0,3h) et a un point supérieur situé à, au plus, r=0,85h (ce point supérieur peut être en-deçà de 0,85h, par exemple à r = 0,5h ou r = 0,7h).

Les deux conditions ci-dessus sont satisfaites pour les quatre courbes I-IV décrites ci-dessus.

On comprend qu'un profil d'aube selon l'invention peut être à angle de dièdre négatif en pied et en tête, avec, par exemple, un angle minimum, en pied (r=0) et/ou en tête (r=h), inférieur à -10° ou même à -15°.

Selon encore un autre exemple, l'angle de dièdre a une valeur strictement positive entre 0,2h et 0,8h, donc sur un intervalle de longueur 0,6h, qui est bien compris entre 0,1 h et 0,85 h ou qui est strictement inclus à l'intérieur de l'intervalle 0,1 h - 0,85 h. Pour la même longueur d'intervalle (0,6h), celui-ci pourrait être compris entre 0,1h et 0,7h (qui est bien compris, lui aussi, entre 0,1 h et 0,85 h).

Selon un autre exemple, la zone ou l'intervalle à angle de dièdre strictement positif s'étend sur une longueur de 0,4h, avec un point inférieur à 0,2h et un point supérieur situé à 0,6h, satisfaisant aux deux conditions qui viennent d'être énoncées. Pour r<0,2h ou r>0,6h, l'angle angle de dièdre est strictement négatif.

En ce qui concerne l'angle maximum, il peut être compris entre, environ, 2,5° et 7° ou 8°, ou même 10°, ou 15°, ou 20°. La partie, ou la zone, qui a un angle maximum, est préférentiellement incluse dans l'intervalle (identifié par M sur la figure 3) dans lequel r varie, environ, de r=0,25h à r=0,65h ou à r= 0,7h. Autrement dit, ce maximum est préférentiellement compris entre r=0,25h et r=0,65h ou 0,7h.

Ainsi, sur la courbe I, le maximum est à, environ, 0,5h tandis que, pour la courbe II, il est à, environ, 0,3h.

Et l'on voit que la différence angulaire entre l'angle de dièdre en pied et l'angle de dièdre en tête est inférieure à environ 10°. Elle est de moins de 2° pour la courbe I, d'environ 5° à 8° pour les courbes II, III et IV.

Enfin, la différence entre l'angle de dièdre maximum (positif) et l'angle de dièdre minimum (négatif) est, dans le cas des 4 exemples I-IV donnés, sensiblement comprise entre 20° et 23°. En général cette différence est inférieure à 20°.

On présente maintenant une variante dans laquelle l'angle de dièdre :

- est positif ou légèrement positif (par exemple il a une valeur comprise entre 0° et 5°) à proximité ou du côté du pied de l'aube (cote r=0 le long de l'axe R),
- puis il croît vers un maximum positif,
- et il diminue ensuite, pour rejoindre une valeur nulle, et enfin, prendre des valeurs négatives jusqu'à la tête de l'aube.

On a représenté en figure 3, une courbe V qui donne, selon cette variante, un exemple d'évolution de l'angle de dièdre (tel que déjà défini ci-dessus), pour lequel on distingue, selon l'axe R :

- une première partie (comportant 1 seule zone, ou 1 seul intervalle, à partir du pied de l'aube), dans laquelle l'angle de dièdre est strictement positif; cette patrie est identifiée par P' sur la figure 3,
- et une deuxième partie (comportant 1 seule zone, ou 1 seul intervalle, proche de la tête de l'aube), dans laquelle l'angle de dièdre est strictement négatif.

Un profil d'aube selon l'invention peut donc être à angle de dièdre positif en pied et négatif en tête, avec, par exemple, un angle minimum, en tête (r=h), inférieur à -10° ou même à -15°.

Pour cette courbe V, la zone de dièdre strictement positif s'étend, selon l'axe R, entre 0 et, environ, 0,72h ; en dehors de cette zone, l'angle de dièdre est strictement négatif, et il est nul en seulement 1 point. En position basse, déjà définie ci-dessus, l'angle de dièdre est strictement positif. En position haute, également déjà définie ci-dessus, l'angle de dièdre est strictement négatif.

De préférence, selon cette variante, l'angle de dièdre a une valeur strictement positive sur une zone qui s'étend, le long de R, sur une longueur d'au moins 0,4 h mais qui est disposée (et qui peut varier) entre, au minimum, r = 0 et, au maximum, r = 0,85 h (dans P' sur la figure 3).

En ce qui concerne l'angle maximum, il peut être compris entre, environ, 3° et 20°.

La zone qui a un angle maximum est disposée préférentiellement entre, environ, r = 0,25h et r = 0,7 h ou, d'une manière encore préférée, entre 0,5h et 0,7h ou entre 0,5h et 0,65h. Cet aménagement permet d'améliorer la marge au pompage de l'étage optimisé sans en dégrader les performances. Le maximum positionné entre 0,25h et 0,7h permet d'aboutir à des angles dièdres inférieurs à -10° ou même à -15° sans générer une pente trop importante de la courbe dièdre sur la partie supérieure de la pale.

Cela permet de ne pas fragiliser la pale vis-à-vis des exigences de tenue mécanique inhérentes à la conception d'aubages, par exemple vis-à-vis des modes 2S1 (Stripe) et 1T (Torsion). Le maximum positionné entre 0,5h et 0,65 ou entre 0,5h et 0,7h représente dans la plupart des cas le meilleur compromis entre les avantages précisés précédemment et la recherche d'amélioration du rendement.

Dans tous les cas, en ce qui concerne l'angle de flèche, celui-ci pourra suivre une loi du type connu selon l'art antérieur. Un autre exemple de loi possible est illustré en figure 4, où l'on voit que l'angle de flèche a une valeur proche de 20° au pied de l'aube, diminue d'abord légèrement dans une première zone le long de l'axe z, puis suit une loi sensiblement linéaire, jusqu'à atteindre, pour environ r = 0,7h, un extremum compris entre -20° est -25°. L'angle de flèche diminue ensuite de nouveau, au fur et à mesure que l'on se rapproche de la tête de l'aube.

Les figures 5A-5C représentent des vues d'une aube réalisée conformément à l'invention :

- la figure 5A en représente une vue de l'intrados 12 de l'aube,
- la figure 5B en représente une vue de l'aube depuis son bord d'attaque 14,
- la figure 5C en représente une vue de l'aube depuis son bord de fuite 16.

Sur ces figures, l'aube est représentée montée sur son pied 18; celui-ci pourra avoir une forme adaptée type d'attache mise en oeuvre (par exemple forme de type marteau, ou pied de sapin, ou queue d'aronde). Mais l'invention s'applique aussi à une aube ou à un disque aubagé monobloc (DAM) dans lequel il n'y pas d'attache ; elle s'applique aussi au cas d'un redresseur, auquel cas il n'y a pas non plus d'attache.

La figure 6 illustre la différence entre une loi d'évolution de l'angle de dièdre, qui ne met pas en oeuvre l'enseignement de la présente invention (courbe I), et une loi selon l'invention (courbe II).

Par rapport à la loi d'évolution selon la courbe I, la loi selon l'invention, représentée sur cette figure, améliore la marge au pompage d'un étage d'un compresseur haute pression d'un facteur au moins égal à 1,5. Le rendement (par exemple le rendement polytropique ou isentropique) n'est pas affecté de manière sensible : on peut même considérer qu'il est un peu meilleur (d'environ quelques dixièmes de pourcents; soit moins de 0,8%) de par la forme en pied de la courbe II.

La marge au pompage d'un étage peut être approximativement définie de la manière suivante, à partir du débit D et de Pi, qui est le taux de compression, ou encore la pression totale en sortie d'aube divisé par la pression totale en entrée d'aube.

Dans le plan Pi, D (figure 7) on définit une courbe d'isorégime, qui donne, pour un débit donné, le taux de compression. Un exemple d'évolution de cette courbe est donné sur la figure 7.

La marge au pompage est définie, à son tour, comme le rapport entre :

- le rapport Pi/D du point le plus proche du pompage (identifié en figure 7 par « Pi/D POMPAGE »),
- et le rapport Pi/D au point où la courbe d'isorégime coupe la ligne de fonctionnement (point identifié en figure 7 par « Pi/D LIGNE DE FONCTIONNEMENT»). La ligne de fonctionnement définit l'ensemble des points de fonctionnement stabilisés du moteur dans le champ Pi-Débit en fonctionnement nominal.

La description ci-dessus a été faite pour une pale ou une aube mobile, en rotation autour de l'axe du moteur, lors du fonctionnement de celui-ci, mais elle s'applique également à la forme d'une aube fixe faisant partie d'un stator fixe ou d'un stator à calage variable.

## Revendications

1. Aube (10, 20) d'un compresseur, définie en chacun des points de sa surface par un angle de flèche et un angle de dièdre, comportant :

   - un pied,
   - une tête, la distance entre le pied et la tête, mesurée le long d'un axe (R), dit axe radial, perpendiculaire à un axe de rotation du compresseur, étant appelée hauteur radiale (h),
   - une zone, comprise entre le pied et la tête, dont une première partie présente un angle de dièdre de bord d'attaque strictement positif, et une deuxième partie présente un angle de dièdre de bord d'attaque strictement négatif,
   - la zone d'angle de dièdre maximum étant comprise, suivant ledit axe radial, entre r = 0,25 h et r = 0,7 h,

   **caractérisée en ce que** l'angle de dièdre de bord d'attaque étant strictement négatif en tête, et inférieur à -10°.

2. Aube selon la revendication 1, **caractérisée en ce que** la différence entre l'angle de dièdre maximum et l'angle de dièdre minimum est comprise entre 20° et 23°.

3. Aube selon la revendication 1 ou 2, l'angle de dièdre de bord d'attaque étant strictement négatif en pied, et inférieur à -10°.

4. Aube selon l'une des revendications 1 à 3, la première partie, à angle de dièdre de bord d'attaque strictement positif, formant un intervalle, ou s'étendant au plus, entre, d'une part, le pied de l'aube (r=0), ou une position située à r=0,1h, et, d'autre part, une position située à r = 0,85h le long de l'axe radial.

5. Aube selon l'une des revendications 1 à 4, la première partie, qui présente un angle de dièdre de bord d'attaque strictement positif, formant un intervalle ayant une longueur, mesurée suivant ledit axe radial, au moins égale à 0,4h et/ou comprise entre 0,1 h et 0,60 h.

6. Aube selon l'une des revendications 1 à 5, la différence entre l'angle de dièdre de bord d'attaque mesuré au pied de l'aube et l'angle de dièdre de bord d'attaque mesuré à la tête de l'aube, étant inférieure à 10°.

7. Aube selon l'une des revendications précédentes, **caractérisée :**

   - **en ce qu'**elle est mobile, son pied étant destiné à être fixé à un disque circulaire d'un rotor dudit compresseur, ou bien l'aube faisant partie d'un disque aubagé monobloc,
   - ou bien en ce qu'elle est fixe, faisant partie d'un stator fixe ou d'un stator à calage variable.

8. Moteur, du type utilisé en aéronautique, comportant un compresseur muni d'aubes fixes (10) et d'aubes mobiles (20), une partie au moins des aubes étant selon l'une des revendications 1 à 7.

## EP 2 976 507 B1

**Patentansprüche**

1. Schaufel (10, 20) eines Verdichters, die in jedem Punkt ihrer Oberfläche durch einen Pfeilwinkel und einen V-Winkel definiert ist, bestehend aus:

   - einem Schaufelfuß,
   - einem Schaufelkopf, wobei der Abstand zwischen dem Fuß und dem Kopf, gemessen entlang einer Achse (R), radiale Achse genannt, die im rechten Winkel zu einer Drehachse des Verdichters steht, radiale Höhe (h) genannt wird,
   - einen Bereich zwischen dem Schaufelfuß und dem Schaufelkopf, von dem ein erster Abschnitt einen strikt positiven Vorderkanten-V-Winkel aufweist, und ein zweiter Abschnitt einen strikt negativen Vorderkanten-V-Winkel aufweist,
   - wobei der Bereich mit dem maximalen V-Winkel gemäß der genannten radialen Achse zwischen r = 0,25 h und r = 0,7 h liegt,

   **dadurch gekennzeichnet,**
   **dass** der Vorderkanten-V-Winkel am Kopf strikt negativ ist und geringer als - 10° ist.

2. Schaufel nach Anspruch 1,

   **dadurch gekennzeichnet,**
   **dass** die Differenz zwischen dem maximalen V-Winkel und dem minimalen V-Winkel zwischen 20° und 23° beträgt.

3. Schaufel nach Anspruch 1 oder 2, wobei der Vorderkanten-V-Winkel am Fuß strikt negativ ist und geringer als -10° ist.

4. Schaufel nach einem der Ansprüche 1 bis 3, wobei der Abschnitt mit strikt positivem Vorderkanten-V-Winkel ein Zwischenstück bildet oder sich höchstens zwischen dem Schaufelfuß (r=0) oder einer Position, die sich bei r=0,1h befindet, einerseits, und einer Position, die sich bei r=0,85h befindet, andererseits, entlang der radialen Achse erstreckt.

5. Schaufel nach einem der Ansprüche 1 bis 4, wobei der Abschnitt mit strikt positivem Vorderkanten-V-Winkel ein Zwischenstück bildet, das eine Länge hat, die, entlang der genannten radialen Achse gemessen, mindestens gleich 0,4 h ist und/oder zwischen 0,1 h und 0,60 h beträgt.

6. Schaufel nach einem der Ansprüche 1 bis 5, wobei die Differenz zwischen dem am Schaufelfuß gemessenen Vorderkanten-V-Winkel und dem am Schaufelkopf gemessenen Vorderkanten-V-Winkel geringer als 10° ist.

7. Schaufel nach einem der vorherigen Ansprüche,

   **dadurch gekennzeichnet,**
   **dass** sie eine Laufschaufel ist, wobei ihr Fuß dazu vorgesehen ist, an einer kreisförmigen Scheibe eines Rotors des genannten Verdichters befestigt zu werden, oder die Schaufel Teil eines einstückigen Schaufelrades ist, oder dass sie feststehend ist, wobei sie Teil eines feststehenden Stators oder eines Stators mit verstellbarer Anstellung ist.

8. Motor des Typs, wie er in der Luftfahrt verwendet wird, welcher einen Verdichter enthält, der mit feststehenden Schaufeln (10) und Laufschaufeln (20) ausgestattet ist, wobei mindestens ein Teil der Schaufeln Schaufeln nach einem der Ansprüche 1 bis 7 sind.

**Claims**

1. Compressor blade (10, 20), defined at each one of the points of its surface by a sweep angle and a dihedral angle, comprising:

   - a root,
   - a tip, the distance between the root and the tip, measured along an axis referred to as the radial axis (R),

8

perpendicular to an axis of rotation of the compressor, being referred to as the radial height (h),
- a zone, between the root and the tip, of which a first portion has a strictly positive leading edge dihedral angle, and a second portion has a strictly negative leading edge dihedral angle,
- the zone of maximum dihedral angle being, along said radial axis, between r = 0.25 h and r = 0.7 h,

**characterised in that** the dihedral angle of the leading edge is strictly negative at the tip, and lower than -10°.

2. Blade according to claim 1, **characterised in that** the difference between the maximum dihedral angle and the minimum dihedral angle is comprised between 20° and 23°.

3. Blade according to claim 1 or 2, with the leading edge dihedral angle being strictly negative at the root, and less than -10°.

4. Blade according to one of claims 1 to 3, the first portion, with a strictly positive leading edge dihedral angle, forming an interval, or extending at most, between, on the one hand, the root of the blade (r=0), or a position located at r=0.1h, and, on the other hand, a position located at r = 0.85h along the radial axis.

5. Blade according to one of claims 1 to 4, the first portion, which has a strictly positive leading edge dihedral angle, forming an interval that has a length, measured along said radial axis, at least equal to 0.4h and/or between 0.1 h and 0.60 h.

6. Blade according to one of claims 1 to 5, with the difference between the leading edge dihedral angle measured at the root of the blade and the leading edge dihedral angle measured at the tip of the blade, being less than 10°.

7. Blade according to one of the preceding claims, **characterised:**

   - **in that** it is mobile, with its root intended to be fixed to a circular disc of a rotor of said compressor, or with the blade being a part of a blisk,
   - or in that it is fixed, being a part of a fixed stator or of a variable timing stator.

8. Engine, of the type used in aeronautics, comprising a compressor provided with fixed blades (10) and mobile blades (20), with a portion at least of the blades being according to one of claims 1 to 7.

**FIG. 1**

20    10   15   20   27   10

26

13    22

18   25

A                                                                    A'

**FIG. 2A**

Z

Y   X

18   25

FIG. 2B

FIG. 2C

EP 2 976 507 B1

**FIG. 3**

**FIG. 4**

12

FIG. 5A

FIG. 5B

FIG. 5C

16

18

FIG. 6

h

HAUTEUR D'AUBE

II

I

-20    -15    -10    -5    0    5    10

ANGLE DIEDRE (*)

Pi

Pi /D
POMPAGE

Pi /D
LIGNE
FONCTIONNEMENT

D

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120243983 A1
- US 20120243975 A1

- US 2010054946 A

**Littérature non-brevet citée dans la description**

- **LEROY H. SMITH et al.** Sweep and dihedral effects in axial-flow turbomachinery. *ASME,* Septembre 1963